# FASCICULE DE BREVET EUROPEEN

(11) **EP 1 406 501 B1**
(45) Date de publication et mention de la délivrance du brevet: **28.02.2007**
(21) Numéro de dépôt: 02760370.3
(22) Date de dépôt: 01.07.2002
(51) Int. Cl.: A23B 4/02, A23B 4/00, A23L 1/317

(54) **PROCEDE DE FABRICATION EN CONTINU DE VIANDE HACHEE, SECHEE, RECONSTITUEE EN PLAQUES MINCES.**
VERFAHREN ZUR KONTINUIERLICHEN HERSTELLUNG VON GETROCKNETEM UND DÜNNEM FLEISCH, WIEDERVERARBEITET IN HACKFLEISCHPLATTEN
METHOD FOR CONTINUOUS PRODUCTION OF MINCED MEAT, DRIED AND RESTORED IN THIN SLABS

(30) Priorité: 13.07.2001 FR 0109564
(43) Date de publication de la demande: 14.04.2004
(73) Titulaire: Adiv Developpement, 63000 Clermont Ferrand (FR)
(72) Inventeur: SIRAMI, Jean, F-63670 La Roche Blanche (FR); LHOUTELLIER, Pascal, F-63122 Ceyrat (FR)
(74) Mandataire: Dupuis, François
(86) Numéro de dépôt international: PCT/FR2002/002274
(87) Numéro de publication internationale: WO 2003/007722

(56) Documents cités:
- GB-A- 2 149 639
- US-A- 3 500 743
- US-A- 3 914 444
- US-A- 4 665 811
- US-A- 4 852 477
- US-A- 4 910 034
- US-A- 5 843 504

## Description

L'invention se rattache au secteur technique de l'industrie de la viande, de sa transformation et de son conditionnement.

La commercialisation de viande hachée est extrêmement développée dans les différents réseaux de vente, bouchers détaillants ou grandes surfaces. Cette viande hachée est généralement constituée par des produits de moindre qualité que les produits de viande vendue à la coupe.

Le conditionnement de la viande hachée en steaks est établi en introduisant dans un malaxeur et presseur ladite viande pour la mettre en forme dans une configuration épaisse, et parallélépipédique.

Le steak de viande hachée obtenu peut être disposé pour des questions de présentation entre deux films de plastique ou de papier, préalablement découpés à la forme dudit steak. L'apparence de la viande suggère une agglomération des morceaux de viande hachée, compactés par l'appareil de mise en forme.

Cette présentation est donc limitée.

Par ailleurs, dans le domaine des viandes salées et séchées, telles que jambons secs, noix de jambon, viandes des grisons, il est courant de présenter celle-ci sous une forme tranchée, permettant ainsi un conditionnement en barquettes de plusieurs tranches du produit considéré. Cela permet donc une consommation en fonction des besoins par l'acheteur.

On connaît également la présentation tranchée de produits tels que saucissons, salamis.

Ces produits sont élaborés par une technique bien classique consistant en un séchage par entraînement à l'air sur des pièces de grande taille, qu'il s'agisse de jambons ou de muscles entiers (cas des viandes séchées), qu'il s'agisse de viande hachée reformée en pièces d'assez gros volume, sous boyaux (cas des saucissons secs, salamis ...). Les temps de séchage à l'air sont longs, se situant entre six semaines (salamis, saucissons secs) et six à neuf mois pour le jambon sec.

Le conditionnement en tranches s'effectue ensuite dans les conditions évoquées ci-avant.

Selon l'art antérieur, il n'est donc pas possible de conditionner la viande hachée en fines tranches en vue d'une présentation en barquettes, car il n'y a aucune tenue et conservation des morceaux de viande hachée.

On connaît par ailleurs une technologie de présentation de produits alimentaires camés s'appliquant à des saumons, et permettant une présentation en tranches. Cette technique est décrite dans les brevets FR 2693351 et EP 587515. Elle consiste en un procédé de salage, séchage et fumage de produits préalablement préparés et découpés en filets. Après le salage et le séchage, les produits sont exposés à un flux de fumée dans une enceinte de fumage. Une opération de séchage imprégnation est simultanément effectuée en mettant les produits en filets au contact d'un mélange de chlorure de sodium et de sucre.

Cette technologie n'est pas adaptable au traitement de la viande hachée qui ne peut être découpée en tranches préalablement à un traitement dans un bain de saumure.

La démarche du demandeur a donc été de rechercher un nouveau concept de traitement de la viande hachée qui permette l'obtention de fines tranches en vue de leur présentation en barquettes lors de leur commercialisation.

Le demandeur a ainsi développé, après différents tests, essais et recherches de solutions, un nouveau procédé présentant des intérêts et avantages substantiels en terme de productivité, en terme de présentation de produits.

Le procédé selon l'invention est remarquable en ce qu'il met en oeuvre les phases suivantes, à partir de viande hachée, pour l'obtention en continu de viande hachée salée et séchée reconstituée en plaques minces.
- La première phase consiste en un hachage fin de viande plus ou moins noble, dans un appareil hacheur, malaxeur.
- La seconde phase consiste à la sortie de l'appareil, d'acheminer la viande hachée dans une pompe à viande, assurant une présentation continue sous forme d'un tube ou d'une bande aplatie continue.
- La troisième phase consiste à dérouler un film en une ou plusieurs parties, susceptible de constituer un fourreau étanche autour du tube continu ou bande de viande hachée.
- La quatrième phase consiste à faire passer ledit tube ou bande de viande hachée disposé dans le fourreau dans un dispositif de laminage, permettant l'étalement de la viande hachée dans une configuration en bande, selon une couche mince, dans un état de compactage et de texture ne faisant pas apparaître les parties de viande elles-mêmes.
- La cinquième phase consiste à dérouler en continu dans un bain de solution de déshydratation - salage, la bande de viande hachée étirée.
- La sixième phase consiste en sortie du bain de solution à enlever le film constituant le fourreau.
- La septième phase consiste à acheminer la bande mince de viande hachée laminée et séchée vers un poste de découpe et de conditionnement.

Selon une autre caractéristique de l'invention, le procédé est susceptible d'autoriser, préalablement ou postérieurement au hachage fin des viandes, l'insertion d'épices et autres composants alimentaires, l'ensemble étant ensuite mélangé et traité suivant le procédé dans les phases successives.

Selon une autre caractéristique de l'invention, le procédé est mis en oeuvre dans une installation qui inclut un appareil de hachage et de mélange avec trémie d'alimentation, recevant en bout une pompe à viande pour la formation en tube de la viande hachée et malaxée, un système de distribution et d'alimentation d'un film en une ou plusieurs parties constituant un fourreau étanche, destiné à entourer le tube ou bande de viande hachée, un dispositif de laminage disposé en aval dudit système de distribution de films, un bain de solution de déshydratation - salage recevant un dispositif mécanique de convoyage du tube ou bande de viande hachée laminée, un dispositif de coupe et séparation du films en fourreau en aval du bain de déshydratation - salage, un dispositif de découpe et de conditionnement en tranches fines de la viande hachée traitée.

Ces caractéristiques et d'autres encore ressortiront bien de la suite de la description.

Pour fixer l'objet de l'invention illustré d'une manière non limitative aux figures des dessins où :
- La figure 1 est une vue d'une présentation de steak haché selon l'art antérieur lors de la vente.
- La figure 2 est une vue d'une présentation de steak haché en fines tranches en barquettes obtenues selon l'invention.
- La figure 3 est une vue à caractère schématique illustrant l'installation de mise en oeuvre du procédé selon l'invention.

Afin de rendre plus concret l'objet de l'invention, on le décrit maintenant d'une manière non limitative illustrée aux figures des dessins.

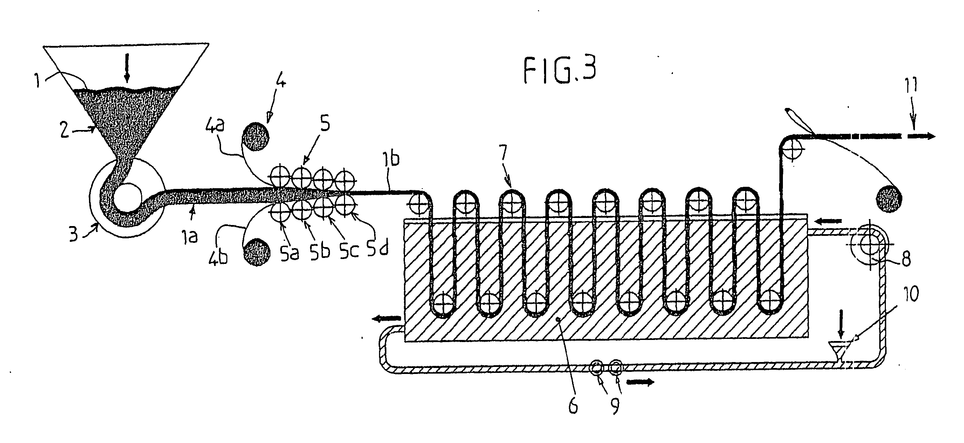

L'installation permettant la fabrication en continu de viande hachée salée et séchée reconstituée en plaques minces comprend d'amont en aval les différents moyens suivants représentés figure 3.

La viande hachée et traitée est référencée dans son ensemble par (1) et on utilisera des sous-références en fonction des différentes phases de traitement et de mise en oeuvre du procédé, en se rapportant à sa forme.

L'installation comprend un appareil hacheur-malaxeur, non représenté sur la figure 3, puis une trémie (2) de réception de viande hachée, plus ou moins noble, à l'état brut. L'appareil peut recevoir soit uniquement de la viande hachée à l'état brut, soit également des produits alimentaires complémentaires tels que épices et autres ingrédients pouvant apporter des qualités nutritives ou sensorielles au produit final. Ledit appareil (2) présente en sortie une pompe à viande (3) permettant une alimentation en continu de la viande hachée, dans une présentation en tube ou bande déjà aplatie, en vue d'un défilement continu. La viande hachée se trouve ainsi dans une configuration tubulaire (la) ou aplatie pendant une phase de fabrication. En aval, se trouve un dispositif (4) distributeur de films destinés à constituer un fourreau. Ce film peut être réalisé en deux parties (4a-4b), avec un film supérieur (4a), et un film inférieur (4b), comme représentés aux dessins, destinés à entourer, envelopper le tube ou bande de viande hachée à l'état précité. Les films sont collés ou scellés l'un à l'autre de toute manière appropriée pour constituer le fourreau. En variante, on peut avoir un seul film replié sur lui-même autour du tube ou bande continue de viande hachée. Ce ou ces films sont enroulés en bobines sur des supports disposés de part et d'autre du sens de défilement du tube de viande hachée dans l'hypothèse d'un fourreau en deux parties initiales, ou à partir d'une seule bobine avec un dispositif de pliage du film pour entourer le tube ou bande de viande. Une automatisation en continu est prévue, permettant un déroulement des films (4a-4b) à une vitesse définie en fonction des conditions de traitement de la viande. Le tube de viande hachée enveloppé et protégé par les films est ensuite acheminé vers un dispositif (5) de laminage pouvant être horizontal ou vertical comprenant plusieurs paires de rouleaux de laminage (5a-5b-5c-5d) permettant un écrasement progressif et un étirement en couche mince de la viande hachée. En conséquence, en sortie de laminage, la viande hachée se présente entourée des films protecteurs (4a-4b), dans un état aplati dans une bande continue mince (lb), compact, sans qu'apparaissent les granules de viande hachée, en donnant l'apparence d'une texture continue et ferme.

En aval du laminage, la bande continue (1b) de viande hachée étirée et laminée est introduite dans un bain de solution de déshydratation - salage (6), dont la longueur est déterminée par le temps d'immersion nécessaire à l'effet de déshydratation-salage de la viande. Le bain de solution de déshydratation - salage inclut un dispositif continu (7) de convoyage à rouleaux permettant un cheminement de la bande de viande dans le bain et pour un temps considéré. Les films supérieur et inférieur entourant la viande hachée et laminée sont choisis pour répondre à différents critères, tenant compte des conditions du procédé de l'invention.
Ce ou ces films doivent tout d'abord être aptes à ne pas être détérioriés pendant le temps de trempage dans le bain de solution de déshydration - salage. Ils doivent permettre également par diffusion l'effet recherché de salage de la viande dans l'intégralité de son volume et épaisseur, et plus généralement des propriétés que lui donne la solution. Ces films doivent par ailleurs avoir une tenue lors du passage dans le convoyeur disposé dans le bain de solution de déshydratation - salage, et notamment lors du passage autour des différents rouleaux de renvoi. Il est précisé que le bain de déshydratation - salage peut être un bain de saumure.

En pratique, le demandeur a sélectionné un film répondant d'une manière optimisée à toutes ces contraintes. Ce film est en papier, et plus particulièrement en papier sulfurisé. Il peut être également constitué de tout matériau permettant la diffusion de l'eau, tel que fibres animales (collagène), cellulose, polyether sulfane...

Comme représenté à la figure 3, le bain de solution de déshydratation - salage est agencé avec un circuit de recyclage (7) et de réinjection de saumure. Il comprend à cet effet une pompe de réinjection (8), ainsi que des capteurs (9) de contrôle des concentrations en soluté du bain. Un dispositif de concentration par évaporation et de dosage (10) intégré dans ledit circuit permet de réajuster la concentration et la composition de la solution.

Le dispositif de convoyage peut être immergé en tout ou partie dans le bain de saumure.

En sortie de bain, la bande de viande hachée étirée et en continu est acheminée vers un dispositif assurant la découpe et l'enlèvement des films supérieur et inférieur (4a-4b), de sorte à ne faire apparaître que la bande de viande hachée elle-même ainsi traitée. Celle-ci est alors acheminée vers un poste (11) de découpe et de conditionnement, consistant à découper en portions (1c) ladite bande de viande hachée.

Ainsi, lesdites portions sont minces et obtenues dans des configurations de découpe correspondant aux formes à obtenir souhaitées. Le procédé selon l'invention permet d'obtenir des portions jusqu'à une épaisseur d'environ 1 mm.

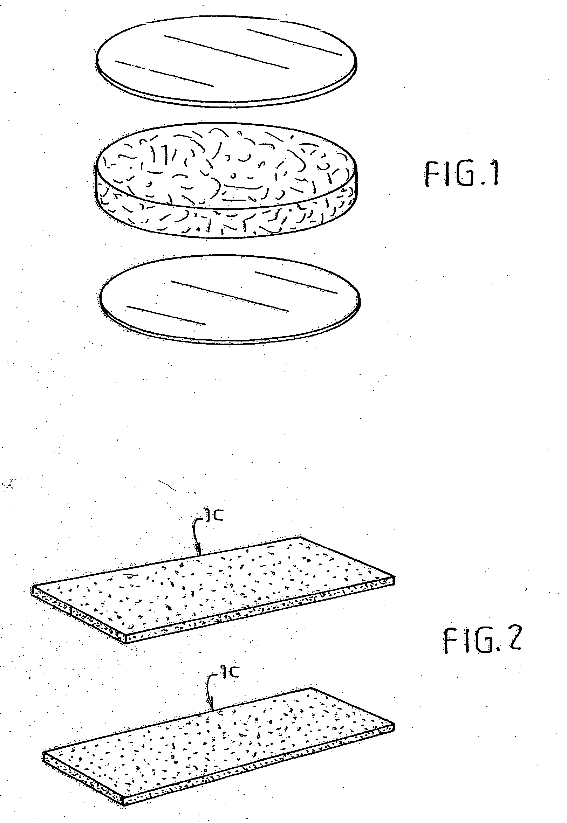

On a représenté figure 2, plusieurs portions (1c) de viande hachée qui se présentent ainsi dans un aspect totalement différent de celui d'origine. Ainsi, selon l'invention, les tranches de viande hachée offrent une texture compacte et il n'est plus décelable visuellement d'identifier la configuration d'origine.

Ce nouveau procédé de transformation de la viande hachée en plaques minces présente de nombreux et importants intérêts et avantages.

Il permet tout d'abord l'utilisation de matières premières variées, plus ou moins nobles, suivant ce que l'on souhaite, et permettant la valorisation de chutes de parages ou de muscles durs.

Il permet également l'obtention d'un produit très standardisé en aspect, forme, goût, texture, moelleux et régulier. Il permet l'intégration d'ingrédients qui diffusent leurs caractéristiques à travers toute la viande ainsi traitée durant le traitement.

Le procédé est industrialisable aisément en permettant un traitement rapide et en continu de cette viande hachée, avec un temps de transformation pouvant être seulement de quelques heures, entre deux et cinq notamment. Il n'exige que peu de main d'oeuvre.

Selon un autre avantage, les films (4a-4b) assurent une triple fonction, à savoir de protection de la viande, d'interface avec la solution en autorisant la transmissibilité des propriétés de la solution jusque dans la viande, et également une fonction de transporteur tout au long du procédé.

La forme des tranches de viande hachée ainsi obtenues peut varier en fonction de l'outil de découpe et s'adapter à tout conditionnement possible.

Outre les formes classiques rectangulaires, l'outil de découpe permet l'obtention de formes plus complexes, en anneaux par exemple, en triangles, ou autres, pouvant apporter un aspect novateur à la commercialisation. La bande de viande peut également être enroulée sur elle-même pour former des tubes ou autres formes.

Les ingrédients et aromates peuvent être adaptés en fonction des lignes de fabrication, sur des quantités désirées et variables.

Sans sortir du cadre de l'invention, le procédé s'applique à toutes compositions à base de produits carnés.

## Revendications

1. Procédé de fabrication et de transformation de viande hachée, **caractérisé en ce qu'**il met en oeuvre les phases suivantes, à partir de viande hachée, pour l'obtention en continu de viande hachée salée et séchée reconstituée en plaques minces.
- La première phase consiste en un hachage fin de viande plus ou moins noble, dans un appareil hacheur.
- La seconde phase consiste à la sortie de l'appareil, d'acheminer la viande hachée dans une pompe à viande, assurant une présentation continue sous forme d'un tube ou d'une bande aplatie continue.
- La troisième phase consiste à dérouler un film en une ou plusieurs parties, susceptible de constituer un fourreau étanche autour du tube continu ou bande de viande hachée.
- La quatrième phase consiste à faire passer ledit tube ou bande de viande hachée disposé dans le fourreau dans un dispositif de laminage, permettant l'étalement de la viande hachée dans une configuration en bande, selon une couche mince, dans un état de compactage et de texture ne faisant pas apparaître les parties de viande elles-mêmes.
- La cinquième phase consiste à dérouler en continu dans un bain de solution de déshydratation - salage la bande de viande hachée étirée.
- La sixième phase consiste en sortie du bain de solution à enlever le film constituant le fourreau.
- La septième phase consiste à acheminer la bande mince de viande hachée laminée et séchée vers un poste de découpe et de conditionnement.

2. Procédé selon la revendication 1, **caractérisé en ce que** préalablement ou ultérieurement au hachage fin des viandes, on procède à l'insertion d'épices et autres composants alimentaires, l'ensemble étant ensuite mélangé et traité suivant le procédé dans les phases successives.

3. Procédé, selon l'une quelconque des revendications 1 et 2, **caractérisé en ce qu'**il s'applique à toutes compositions à base de produits carnés.

4. Procédé, selon l'une quelconque des revendications 1, 2 et 3, **caractérisé en ce que** le bain de solution de déshydratation - salage est un bain de saumure.

5. Installation de mise en oeuvre du procédé selon l'une quelconque des revendications 1, 2, 3 et 4, **caractérisée en ce qu'**elle inclut :
- un appareil de hachage et de mélange puis une trémie d'alimentation, recevant en bout une pompe à viande pour la formation en tube de la viande hachée et malaxée,
- un système de distribution et d'alimentation d'un ou de deux films constituant un fourreau, soudés ou collés sur lui (eux)-même(s) destinés à entourer le tube de viande hachée,
- un dispositif de laminage disposé en aval dudit système de distribution de films,
- un bain de solution de déshydratation - salage recevant un dispositif mécanique de convoyage du tube de viande hachée laminée,
- un dispositif de coupe et séparation du film constituant le fourreau en aval du bain,
- un dispositif de découpe et de conditionnement en tranches fines de la viande hachée traitée.

6. Installation selon la revendication 5, **caractérisée en ce que** le film constituant le fourreau est établi en deux parties avec un film supérieur et un film inférieur enroulés en bobine sur des supports disposés de part et d'autre du sens de défilement du tube de viande hachée, lesdits films étant déroulés selon une automatisation définie selon le temps de mise en oeuvre du procédé, lesdits films étant soudés ou collés sur eux-mêmes.

7. Installation selon la revendication 5, **caractérisée en ce que** le film constituant le fourreau est établi sous forme d'un film unique replié sur lui-même pour entourer le tube ou bande de viande, ledit film étant collé ou soudé pour assurer sa fermeture.

8. Installation selon la revendication 5, **caractérisée en ce que** le dispositif de laminage comprend plusieurs paires de rouleaux de laminage, permettant un écrasement progressif et un étirement en couche mince de la viande hachée.

9. Installation selon la revendication 5, **caractérisée en ce que** le bain de solution de déshydratation - salage est agencé avec un circuit de recyclage (7) et de réinjection de saumure, et **en ce qu'**il comprend une pompe de réinjection (8), ainsi que des capteurs (9) de contrôle de dosage de la saumure, un dispositif de concentration par évaporation et de dosage (10) intégré dans ledit circuit permettant de réajuster la composition de la solution.

10. Installation selon la revendication 5, **caractérisée en ce que** le ou les films constituant le fourreau sont en papier et notamment en papier sulfurisé.

11. Installation selon la revendication 5, **caractérisée en ce que** le ou les films constituant le fourreau sont réalisés à partir de fibres animales (collagène), cellulose, polyether sulfane.

12. Produit obtenu selon le procédé défini aux revendications 1 et 4, **caractérisé en ce qu'**il se présente sous une forme de portion mince à texture continue et ferme.

## Claims

1. A method for producing and processing minced meat **characterised in that** it uses the following phases, starting with minced meat, in order to provide a continuous supply of salted, dried minced meat reconstituted into thin slices.
- The first phase involves finely chopping more or less fine cuts of meat in a mincing machine.
- The second phase involves, at the outlet of the machine, routing the minced meat to a meat pump that ensures continuous presentation in the form of a tube or a continuous flattened strip.
- The third phase involves winding a film made of one or more parts capable of constituting a leaktight casing around the continuous tube or strip of minced meat.
- The fourth phase involves feeding said tube or strip of minced meat enclosed in the casing into a meat-rolling machine making it possible to spread the minced meat into a strip configuration in a thin layer in a compacted state with a texture that does not reveal the actual pieces of meat themselves.
- The fifth phase involves continuously winding the strip of stretched minced meat through a bath of dehydration/curing solution.
- The sixth phase involves removing the film that constitutes the casing on removal of the product from the solution bath.
- The seventh phase involves routing the thin strip of rolled and dried minced meat to a cutting and packaging station.

2. A method as claimed in claim 1, **characterised in that**, before or after finely chopping the meat, spices or other food ingredients are added, this assembly then being mixed and processed in accordance with the successive phases of the method.

3. A method as claimed in either claim 1 or 2, **characterised in that** it is applied to any meat-product-based mixture.

4. A method as claimed in any of claims 1, 2 and 3 **characterised in that** the bath of dehydration/curing solution is a brine bath.

5. A plant for using the method as claimed in any of claims 1, 2, 3 and 4, **characterised in that** it includes:
- a meat mincing and mixing machine, then a feed hopper, the end of which accommodates a meat pump in order to form the minced and mixed meat into a tube,
- a system for dispensing and feeding one or two films that constitute a casing that is/are welded or bonded onto itself/each other and intended to surround the tube of minced meat,
- a rolling machine located downstream from said film dispensing system,
- a bath of dehydration/curing solution that accommodates a mechanical device for conveying the tube of rolled minced meat,
- a device to cut and separate the film that constitutes the casing, downstream from the bath,
- a device to chop and package the processed minced meat in thin slices.

6. A plant as claimed in claim 5, **characterised in that** the film that constitutes this casing consists of two parts with an upper film and a lower film wound on a reel on supports located either side of the direction in which the tube of minced meat is transported, the unwinding of said films being automated depending on the time during which the method is used, said films being welded or bonded onto each other.

7. A plant as claimed in claim 5, **characterised in that** the film that constitutes the casing is in the form of a single film that is folded onto itself in order to enclose the tube or strip of meat, said film being bonded or welded in order to close it.

8. A plant as claimed in claim 5, **characterised in that** the rolling machine comprises several pairs of nip rolls that allow gradual crushing and stretching of the minced meat into a thin layer.

9. A plant as claimed in claim 5, **characterised in that** the bath of dehydration/curing solution is designed with a circuit (7) for recycling and reinjecting the brine and **in that** it comprises a reinjection pump (8) as well as sensors (9) to monitor the strength of the brine, an evaporation concentrating and metering device (10) installed in said circuit making it possible to readjust the composition of the solution.

10. A plant as claimed in claim 5, **characterised in that** the film or films that constitute the casing are made of paper, especially vegetable parchment.

11. A plant as claimed in claim 5, **characterised in that** the film or films that constitute the casing are made of animal fibres (collagen), cellulose or polyether sulfane.

12. A product obtained in accordance with the method defined in claims 1 and 4, **characterised in that** it is in the form of thin portions with a continuous, firm texture.

## Patentansprüche

1. Verfahren zur Herstellung und Verarbeitung von Hackfleisch, **dadurch gekennzeichnet, dass** die folgenden Phasen an dem Hackfleisch ausgeführt werden, um auf kontinuierlichem Wege gesalzenes und getrocknetes Hackfleisch in dünnen Platten zu erhalten.
- Die erste Phase besteht darin, dass mehr oder weniger edles Fleisch in einem Zerhacker fein zerhackt wird.
- Die zweite Phase besteht darin, dass das Hackfleisch am Austritt des Zerhackers in eine Fleischpumpe weitergeleitet wird, so dass es die Form eines kontinuierlichen Rohres oder eines kontinuierlichen, abgeflachten Bandes erhält.
- Die dritte Phase besteht darin, dass eine dünne Schicht in einem Abschnitt oder in mehreren Abschnitten abgerollt wird, die um das kontinuierliche Rohr oder Band aus Hackfleisch eine dichte Hülse bildet.
- Die vierte Phase besteht darin, dass das in der Hülse angeordnete Rohr oder Band aus Hackfleisch durch eine Walzvorrichtung geführt wird, so dass das Hackfleisch in einer dünnen Schicht in einem Band ausgerollt wird und die Fleischabschnitte aufgrund der Verdichtung und Struktur nicht mehr zu sehen sind.
- Die fünfte Phase besteht darin, dass das ausgewalzte Hackfleischband kontinuierlich in ein Bad aus einer Dehydrier-/Salzlösung abgerollt wird.
- Die sechste Phase besteht darin, dass die dünne Schicht, aus der die Hülse besteht, am Badaustritt entfernt wird.
- Die siebte Phase besteht darin, dass das ausgewalzte und getrocknete, dünne Hackfleischband zu einer Schneide- und Aufbereitungs- bzw. Verpackungsstation weitergeleitet wird.

2. Verfahren nach Anspruch 1, **dadurch gekennzeichnet, dass** vor oder nach dem Feinzerhacken des Fleisches Gewürze und andere Nahrungsmittelzusätze hinzugefügt werden, wobei das Ganze anschließend nach dem Verfahren der aufeinanderfolgenden Phasen gemischt und verarbeitet wird.

3. Verfahren nach einem der Ansprüche 1 und 2, **dadurch gekennzeichnet, dass** es sich auf sämtliche Zusammensetzungen auf der Basis von Fleischprodukten bezieht.

4. Verfahren nach einem der Ansprüche 1, 2 und 3, **dadurch gekennzeichnet, dass** es sich bei dem Bad aus einer Dehydrier-/Salzlösung um eine Salzlake handelt.

5. Anlage zur Durchführung des Verfahrens nach einem der Ansprüche 1, 2, 3 und 4, **dadurch gekennzeichnet, dass** sie folgendes besitzt :
- einen Zerkleinerungs- und Mischapparat sowie einen Fülltrichter, an dessen Ende sich eine Pumpe befindet, in der das zerkleinerte und geknetete Fleisch zu einem Rohr geformt wird,
- ein System zur Verteilung und Zuführung einer oder mehrerer dünner Schichten, die eine Hülse bilden, welche mit sich selbst verschweißt oder verklebt ist bzw. sind, und die das Rohr aus Hackfleisch umgibt,
- eine Walzvorrichtung, die hinter dem System zur Verteilung der dünnen Schichten angeordnet ist,
- ein Bad aus einer Dehydrier- / Salzlösung, welche eine mechanische Vorrichtung zur Förderung des ausgewalzten Hackfleischrohres aufnimmt,
- eine dem Bad nachgeordnete Vorrichtung zum Abschneiden und Trennen des dünnen Films, der die Hülse darstellt,
- eine Schneid- und Aufbereitungs-/Verpackungsvorrichtung, mit der das verarbeitete Hackfleisch in dünne Scheiben geschnitten und verpackt wird.

6. Anlage nach Anspruch 5, **dadurch gekennzeichnet, dass** die dünne Schicht, die die Hülse bildet, aus zwei Abschnitten besteht und eine obere Schicht und eine untere Schicht aufweist, die auf Spulen aufgewickelt sind, die sich an Haltern befinden, die zu beiden Seiten der Abwickelrichtung des Hackfleischrohres angeordnet sind, wobei die beiden dünnen Schichten entsprechend einer Automatisierung abgewickelt werden, welche entsprechend der Zeit festgelegt wird, die für die Durchführung des Verfahrens benötigt wird, wobei die Schichten untereinander verschweißt oder verklebt werden.

7. Anlage nach Anspruch 5, **dadurch gekennzeichnet, dass** die dünne Schicht, welche die Hülse bildet, aus einer einzigen dünnen Schicht besteht, die aufeinander geklappt ist, und das Fleischrohr oder Fleischband umgibt, wobei die dünne Schicht verklebt oder verschweißt wird, damit sie geschlossen bleibt.

8. Anlage nach Anspruch 5, **dadurch gekennzeichnet, dass** die Walzvorrichtung mehrere Walzrollenpaare aufweist, die ein schrittweises Plattdrücken und Auswalzen des Hackfleisches in dünne Schichten ermöglichen.

9. Anlage nach Anspruch 5, **dadurch gekennzeichnet, dass** das Bad aus einer Dehydrier- / Salzlösung mit einem Rezirkulations- (7) und Reinjektionskreislauf von Salzlake angeordnet ist, und dass es eine Reinjektionspumpe (8) sowie Messfühler (9) zur Steuerung der Dosierung der Salzlake sowie eine Konzentrationsvorrichtung durch Verdampfung und eine Dosiervorrichtung (10) besitzt, die in den Kreislauf integriert ist, und die eine Änderung der Zusammensetzung der Lösung erlaubt.

10. Anlage nach Anspruch 5, **dadurch gekennzeichnet, dass** die dünne Schicht oder die dünnen Schichten, die die Hülse bilden, aus Papier, und insbesondere aus Pergamentpapier, hergestellt sind.

11. Anlage nach Anspruch 5, **dadurch gekennzeichnet, dass** die dünne Schicht oder die dünnen Schichten, die die Hülse bilden, aus tierischen Fasern (Kollagen), Zellulose, Polyethersulfan hergestellt werden.

12. Produkt, das man gemäß dem Verfahren erhält, das in den Ansprüchen 1 bis 4 beschrieben wird, **dadurch gekennzeichnet, dass** es in dünnen Portionen mit kontinuierlicher und fester Struktur dargeboten wird.
